(19) Europäisches Patentamt
European Patent Office
Office européen des brevets

(11) Veröffentlichungsnummer: **0 025 008**
**A1**

(12) # EUROPÄISCHE PATENTANMELDUNG

(21) Anmeldenummer: 80810191.9

(22) Anmeldetag: 10.06.80

(51) Int. Cl.³: C 08 J 3/20
C 08 K 5/34, C 08 L 67/00

(30) Priorität: 15.06.79 CH 5624/79

(43) Veröffentlichungstag der Anmeldung:
11.03.81 Patentblatt 81/10

(84) Benannte Vertragsstaaten:
CH DE FR GB IT LI NL

(71) Anmelder: CIBA-GEIGY AG
Patentabteilung Postfach
CH-4002 Basel(CH)

(72) Erfinder: Bäbler, Fridolin, Dr.
Nussbaumweg 19
CH-4123 Allschwil(CH)

(54) **Verfahren zum Färben linearer Polyester in der Schmelze mit Perylentetracarbonsäure-bis-Methylimid und lineare Polyester.**

(57) Verfahren zum Färben linearer Polyester in der Schmelze in marine- und dunkelblauen Tönen, dadurch gekennzeichnet, dass man als Färbemittel eine Mischung verwendet, bestehend aus 0,2-1 Gew.-% Perylentetracarbonsäure -bis-methylimid bezogen auf die Polyestermenge und einem blauen polymerlöslichen Farbstoff.

EP 0 025 008 A1

BEZEICHNUNG GEÄNDERT
siehe Titelseite

Verfahren zum Färben linearer Polyester in der Schmelze mit Perylentetracarbonsäure-bis-methylimid.

Die Verwendung von Perylentetracarbonsäure-bis-methylimid zum Färben von Polyestern in der Masse wird in der DE-OS 2,153,087 beschrieben. Trotz der ausgezeichneten Echtheiten der mit diesem Perylenpigment eingefärbten Polyesterfasern, sind die erhaltenen Färbungen aufgrund der wenig attraktiven braunroten Nuance von geringem Interesse.

In der DE-OS 2,732,586 ist ein Verfahren zum Färben linearer Polyester in der Schmelze beschrieben, wonach man als Färbemittel eine Mischung von 0,001 - 0,2 Gew. % eines sich in Lösung befindlichen Perylentetracarbonsäurederivates und eines davon verschiedenen polymerlöslichen Farbstoffes verwendet. Nach diesem Verfahren erhält man auf dem Rot- und Gelbgebiet sehr farbstarke und brillante Färbungen; es ist jedoch nicht möglich, damit farbstarke Marine- und Dunkelblaunuancen zu erzeugen.

Es wurde nun gefunden, dass man lineare Polyester aus der Schmelze in farbstarken, attraktiven marine- und dunkelblauen bis blau-schwarzen Tönen färben kann, wenn man als Färbemittel eine Mischung verwendet, bestehend aus 0,2 - 1 Gew.% Perylentetracarbonsäure-bis-methylimid bezogen auf die Polyestermenge und einem blauen polymerlöslichen Farbstoff.

Dies ist überraschend, da nicht vorauszusehen war, dass mit einem rotbraunen Farbstoff in den erfindungsgemässen Mischungen reine und farbstarke Marine- und Dunkelblau-Nuancen erhalten werden, umsomehr, da bei der Verwendung von Mischungen anderer Perylentetracarbonsäure-bis-phenyl- oder bis-alkylimide in Konzentrationen von mehr als 0,2% bezogen auf die Polyestermenge mit einem blauen polymerlöslichen Farbkörper, wenig attraktive, farbschwache blaue Nuancen erhalten werden.

Um die Verteilung des Perylentetracarbonsäure-bis-methylimids in der heissen Polymerschmelze zu beschleunigen, verwendet man mit Vorteil ein feinkristallines, konditioniertes Perylentetracarbonsäure-bis-methylimid.

Anstelle des reinen Perlyentetracarbonsäure-bis-methylimids lassen sich auch durch Mischkondensation, ausgehend von Perylentetracarbonsäuredianhydrid, mit Methylamin oder Methylamin abgebenden Verbindungen und 1-8 Mol-% bezogen auf 1 Mol Perylentetracarbonsäuredianhydrid an aliphatischen und/oder cycloaliphatischen primären Aminen mit 3-12 C-Atomen, beispielsweise Butyl-, Cyclohexyl-, Lauryl-, 3-Methoxypropylamin, hergestellte Gemische von Perylentetracarbonsäure-bis-methlimid mit anderen Bis-alkylimiden erfindungsgemäss einsetzen. Solche Gemische liegen in den meisten Fällen gegenüber dem auf übliche Art hergestellten reinen und unkonditionierten grobkristallinen Perylentetracarbonsäure-bis-methylimid in einer feinen kristallinen und deshalb in der heissen Polymerschmelze besser verteilbaren Form vor.

Als polymerlösliche blaue Farbkörper können Vertreter verschiedener Farbstoffklassen verwendet werden; sie müssen jedoch über eine genügende Thermostabilität verfügen, sowie eine Lichtabsorption etwa im Bereich von 550 - 800 nm aufweisen.

Vorzugsweise verwendet man polymerlösliche Phthalocyanine, insbesondere die Alkyl- oder Alkoxyalkylamide der Cu-Phthalocyanin-tri- oder tetrasulfonsäure, enthaltend 1-20 C-Atome in den Alkylresten.

Ebenfalls bevorzugt sind blaue Anthrachinonfarbstoffe, insbesondere Amino-, Alkylamino-, Cyclohexylamino-, Hydroxyalkylamino-, Alkoxyalkylamino oder Phenylaminoanthrachinone, die als weitere Auxochrome noch Hydroxy-, Phenylmercapto- oder Benzoylaminogruppen enthalten können.

Als Beispiele seien genannt:
1,4-Bisarylaminoanthrachinone, insbes. gegebenenfalls im Anthrachinon- und in den Phenylresten weiter substituierte 1,4-Bisphenylamino wie 1,4-Bis-halogenphenylaminoanthrachinone, 1,4-Mesidinoanthrachinon, 1,4-Bis-[(2',4',6'-trimethyl-3'-phenylaminosulfonyl-cyclohexyl)-amino]-anthrachinon, 1,4-Bis(2',6'-dimethylanilino)-6,7-dichlor-anthrachinon. Ferner das Isomerengemisch von 1,4-Bis-(dichloroanilino)-anthrachinon, hergestellt nach der französischen Patentschrift 1571171, sowie 1-Arylamino-hydroxyanthrachinone, insbes. 1-Phenylamino-4-hydroxyanthrachinone z.B. 1-(4-Acetaminoanilino)-4-hydroxyanthrachinon oder 1-(4-Propionylaminoanilino)-4-hydroxyanthrachinon , sowie ein technisches Gemisch von 1-(4'-Acetaminoanilino)-4-hydroxy- mit 1,4-Bis-(4'acetaminoanilino)-anthrachinon, schliesslich 1-Arylamino-4-acylamino-anthrachinone insbes. im Phenyl- und Benzoylrest gegebenenfalls substituierte 1-Phenylamino-4-benzoylaminoanthrachinon wie 1-Phenylamino-4-benzoylaminoanthrachinon.

Das Verhältnis von polymerlöslichem Farbstoff zu Polyester kann je nach der gewünschten Farbstärke innerhalb weiter Grenzen schwanken. Im allgemeinen empfiehlt sich die Verwendung von 0,005 - 2 Teilen Farbstoff auf 100 Teile Polyester. In jedem Falle muss er im Gegensatz zum Perylentetracarbonsäure-bis-methylimid im Polymeren vollständig gelöst sein und auch in der Faser noch in gelöstem Zustand vorliegen.

Das Perylentetracarbonsäure-bis-methylimid kann vor oder während des Färbevorgangs mit dem polymerlöslichen Farbstoff vermischt werden. Findet die Mischung vor dem Färbevorgang statt, so

verwendet man zweckmässig eine vordispergierte Form, z.B. ein sog. Masterbatch oder Präparat. Sie erfolgt damit unter Zugabe von grösseren Mengen Trägerstoff, beispielsweise 20 bis 95 Gew.%. Als Trägerstoff eignet sich insbesondere ein Polyäthylenterephthalat, wie es zur Faserherstellung verwendet wird oder ein solcher oder ein anderer PES mit niedrigem Erweichungspunkt, wie beispielsweise Polyäthylensebazat oder ein Polyester-mischpolykondensat ferner ein Polystyrol mit einem Erweichungspunkt über 100°.

Als lineare Polyester sowohl geeignet als Carrier in den Präparaten wie auch als zu färbende Substrate seien insbesondere jene erwähnt, die durch Polykondensation von Terephthalsäure oder deren Estern mit Glykolen der Formel $HO-(CH_2)_n-OH$, worin n die Zahl 2 - 10 bedeutet, oder mit 1,4-Di(hydroxymethyl)cyclohexan oder durch Polykondensation von Glykoläthern von Hydroxybenzoesäuren, beispielsweise p-(β-Hydroxyäthoxy)-benzoesäure erhalten werden. Der Begriff lineare Polyester umfasst auch Kopolyester, die durch teilweisen Ersatz der Terephthalsäure durch eine andere Dicarbonsäure oder eine Hydroxycarbonsäure und/oder durch teilweisen Ersatz des Glykols durch ein anderes Diol erhalten werden.

Von besonderem Interesse sind jedoch die Polyäthylenterephthalate.

Die zu färbenden linearen Polyester werden zweckmässig in Form von Pulver, Schnitzeln oder Granulaten mit den Farbstoffen innig vermischt. Dies kann beispielsweise durch Beschichten der Polyesterteilchen mit dem fein verteilten trockenen Farbstoffpulver oder durch Behandeln der Polyesterteilchen mit einer Lösung bzw. Dispersion der Farbstoffe in Wasser oder einem organischen Lösungsmittel und nachheriger Entfernung des Lösungsmittels geschehen. Die so behandelten Polyesterteilchen werden nach bekannten Verfahren im Extruder geschmolzen und zu Gegenständen, insbesondere Folien oder Fasern ausgepresst oder zu Platten gegossen.

Schliesslich kann das Färbemittel auch direkt dem geschmolzenen Polyester zugegeben werden z.B. nach dem Injektionsverfahren.

Die erfindungsgemäss erhältlichen Polyester enthalten das Perylentetracarbonsäure-bis-methylimid in fein verteiltem ungelöstem Zustand. Die Färbungen zeichnen sich durch überraschend hohe Farbstärke, Gleichmässigkeit, Reinheit, Brillanz, Sättigung und hohe Lichtechtheit trotz geringer Farbstoffmengen aus.

Die textilen Eigenschaften und Textilechtheiten der nach diesem Verfahren gefärbten Spinnfasern werden durch den Zusatz der Perylenverbindung nicht beeinträchtigt.

Die erfindungsgemäss spinngefärbten Fasern können mit Dispersionsfarbstoffen auf übliche Art überfärbt werden.

In den nachfolgenden Beispielen bedeuten die Teile, sofern nichts anderes angegeben wird, Gewichtsteile, die Prozente Gewichtsprozente und die Temperaturen sind in Celsiusgraden angegeben.

Beispiel 1: 1000 Teile Polyäthylenterephthalatgranulat, 10 Teile Kupferphthalocyanintetrasulfonsäure-(3-isopropoxypropyl)-amid, sowie 2 Teile Perylentetracarbonsäure-bis-methylimid werden in einer Mischtrommel intensiv vermischt und danach während ca. 24 Stunden bei 100°C im Vakuum bei 15 mm Hg getrocknet. Das so behandelte Granulat wird bei ca. 290° nach dem Schmelzspinnverfahren versponnen. Man erhält brillante, sehr farbstarke Marineblaufärbungen mit ausgezeichneten Licht- und textilen Echtheiten.

Beispiel 2: Verfährt man analog wie in Beispiel 1, verwendet jedoch anstelle von 10 Teilen Kupferphthalocyanintetrasulfonsäure-(3-isopropoxypropyl)-amid 16 Teile Kupferphthalocyanintetrasulfonsäure-(3-methoxypropyl)-amid und anstelle von 2 Teilen, 4 Teile Perylentetracarbonsäure-bis-methylimid, so erhält man sehr farbstarke Marineblaufärbungen mit analogen Eigenschaften.

Beispiel 3: In einem Doppelmuldenkneter verknetet man während 5 Stunden bei einer Temperatur von 70-75° 80 Teile Kupferphthalocyanintetrasulfonsäure-(3-methoxypropyl)-amid, 20 Teile Perylentetracarbonsäure-bis-methylimid, 500 Teile feingemahlenes Natriumchlorid, 150 Teile eines Polyesters mit einem Schmelzbereich von 80-130° (Dynapol L 206, Dynamit Nobel), und 100 Teile Diacetonalkohol.

Durch Zugabe von 100 Teilen Wasser wird die Knetmasse in ein grobes Granulat zerlegt und dieses zur Feinstgranulierung auf einer Zahnkolloidmühle mit beliebig viel Wasser einer Nassmahlung unterworfen. Die erhaltene Suspension wird filtriert, mit Wasser salz- und lösungsmittelfrei gewaschen und der Filterkuchen im Vakuumschrank bei 70° getrocknet. Das leicht gesinterte Trockengut wird gepulvert. Das erhaltene blaue Präparat enthält 40% Farbstoff. Das Pulver kann so verwendet, oder aber auf einem Extruder zu Granulaten umgeschmolzen werden, oder aber zu einem Masterbatch niedrigerer Farbstoffkonzentration weiterverarbeitet werden.

Nach dem in Beispiel 1 und 2 beschriebenen Verfahren erhält man damit marineblau gefärbte Polyesterfasern mit ausgezeichneten Eigenschaften.

Beispiel 4: Verfährt man analog wie in Beispiel 1, verwendet jedoch anstelle von 10 Teilen Kupferphthalocyanin -(3-isopropoxypropyl)-amid, 10 Teile des Farbstoffes der Formel

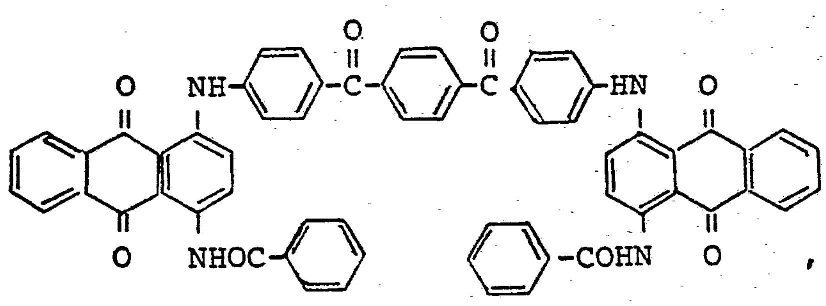 ,

so erhält man sehr farbstarke dunkelblaue brillante Färbungen mit ebenso guten Eigenschaften.

Beispiel 5: Verwendet man als polymerlöslichen Farbstoff das 1-Phenylamino-4-benzoylamino-anthrachinon und verfährt sonst wie in Beispiel 4 beschrieben, so erhält man sehr farbstarke dunkelblaue brillante Färbungen mit ebenso guten Eigenschaften.

Beispiel 6: a) 240 Teile Polyäthylenterephthalat-Pulver, 50 Teile des grünstichigblauen Kupferphthalocyanintetrasulfonsäure-(3-methoxypropyl)-amides und 10 Teile Perylentetracarbonsäure-bis-methylimid werden während 1 1/2 Stunden in einem Behälter auf einem Rollgestell gemischt. Die Mischung wird während 48 Stunden im Vakuumschrank bei 80° getrocknet. Anschliessend wird die Mischung auf einem Einschneckenextruder (Schneckendurchmesser 20 mm, L:D = 20, Temperatur : 230°) zu einem Draht mit 2 mm Durchmesser extrudiert und der Draht auf einer Schneidemaschine zu zylindrischem Granulat von 2-3 mm Länge geschnitten. Das erhaltene Präparat enthält 20% Farbstoff.

b) Vermischt man nach dem in Beispiel 1 angegebenen Verfahren 50 Teile dieses Präparates mit 950 Teilen Polyäthylenterephthalatgranulat und verspinnt es bei ca. 290°, so erhält man sehr farbstarke Marineblaufärbungen mit ebensoguten Eigenschaften.

Beispiel 7: a) In einem Doppelmuldenkneter verknetet man während 5 Stunden bei einer Temperatur von 70-75°, 100 Teile Perylentetracarbonsäure-bis-methylimid, 500 Teile feingemahlenes Natriumchlorid, 150 Teile eines Polyesters mit einem Schmelzbereich von 80 - 130° (Dynapol L 206, Dynamit Nobel), und 100 Teile Diacetonalkohol.

Durch Zugabe von 100 Teilen Wasser wird die Knetmasse in ein grobes Granulat zerlegt und dieses zur Feinstgranulierung auf einer Zahnkolloidmühle mit beliebig viel Wasser einer Nachmahlung unterworfen. Die erhaltene Suspension wird filtriert, mit Wasser salz- und lösungsmittelfrei gewaschen und der Filterkuchen im Vakuumschrank bei 70° getrocknet. Das leicht gesinterte Trockengut wird gepulvert. Das Pulver kann so verwendet, oder aber auf einem Extruder zu Granulaten umgeschmolzen werden, oder aber zu einem Masterbatch niedrigerer Farbkörperkonzentration weiterverarbeitet werden.

b) Vermischt man nach dem in Beispiel 1 angegebenen Verfahren 5 Teile dieses 40%-igen Präparates mit 1000 Teilen Polyestergranulat und 10 Teilen Kupferphthalocyanintetrasulfonsäure-(3-isopropoxypropyl)-amid, verspinnt bei ca. 290°, so erhält man sehr farbstarke Marineblaufärbungen mit ebensoguten Eigenschaften.

Patentansprüche

1. Verfahren zum Färben linearer Polyester in der Schmelze in marine- und dunkelblauen Tönen, dadurch gekennzeichnet, dass man als Färbemittel eine Mischung verwendet, bestehend aus 0,2-1 Gew.% Perylentetracarbonsäure-bis-methylimid bezogen auf die Polyestermenge und einem blauen polymerlöslichen Farbstoff.

2. Verfahren gemäss Anspruch 1, dadurch gekennzeichnet, dass man als polymerlöslichen Farbstoff ein Phthalocyanin-Derivat verwendet.

3. Verfahren gemäss Anspruch 2, dadurch gekennzeichnet, dass man ein Alkyl- oder Alkoxy-alkylamid der Cu-Phthalocyanin-tri-oder tetrasulfonsäure verwendet.

4. Verfahren gemäss Anspruch 1, dadurch gekennzeichnet, dass man als polymerlöslichen Farbstoff einen Anthrachinonfarbstoff verwendet.

5. Verfahren gemäss Anspruch 4, dadurch gekennzeichnet, dass man ein Amino-, Alkylamino- Cyclohexylamino-, Hydroxyalkylamino-, Alkoxyalkylamino-oder Phenylaminoanthrachinon verwendet, das als weitere Auxochrome noch Hydroxy-, Phenylmercapto- oder Benzoylaminogruppen enthalten kann.

6. Lineare Polyester enthaltend 0,2-1 Gew.% Perylentetracarbonsäure-bis-methylimid und einen blauen polymerlöslichen Farbstoff.

0025008

Europäisches Patentamt

# EUROPÄISCHER RECHERCHENBERICHT

Nummer der Anmeldung
EP 80810191.9

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | GB - A - 1 532 750 (CIBA-GEIGY) (22-11-1978)<br>+ Gesamt +<br>-- | 1-6 | C 08 J 3/20<br>C 08 K 5/34<br>C 08 L 67/00 |
| | GB - A - 1 198 372 (HOECHST)<br>+ Gesamt +<br>---- | 1 | |
| | | | RECHERCHIERTE SACHGEBIETE (Int. Cl. 3) |
| | | | C 08 J<br>C 08 K<br>C 08 L 67/00 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| WIEN | 26-08-1980 | WEIGERSTORFER |

EPA form 1503.1 06.78